# EUROPÄISCHE PATENTSCHRIFT

(11) **EP 4 668 670 B1**
(45) Veröffentlichungstag und Bekanntmachung des Hinweises auf die Patenterteilung: **12.08.2026**
(21) Anmeldenummer: 24183522.2
(22) Anmeldetag: 20.06.2024
(51) Int. Cl.: H04L 9/08

(54) **ÜBERTRAGEN EINES GEHEIMEN SCHLÜSSELS INNERHALB EINES QKDN**
TRANSFERRING A SECRET KEY WITHIN A QKDN
TRANSMISSION D'UNE CLÉ SECRÈTE À L'INTÉRIEUR D'UN QKD

(43) Veröffentlichungstag der Anmeldung: 24.12.2025
(73) Patentinhaber: Deutsche Telekom AG, 53113 Bonn (DE)
(72) Erfinder: GEITZ, Marc, 58089 Hagen (DE); RIBEIRO SENA, Matheus, 14129 Berlin (DE)
(74) Vertreter: RDL Patentanwälte PartG mbB

(56) Entgegenhaltungen:
- US-A1- 2010 293 380
- MINA DOOSTI ET AL: "Establishing shared secret keys on quantum line networks: protocol and security", ARXIV.ORG, CORNELL UNIVERSITY LIBRARY, 201 OLIN LIBRARY CORNELL UNIVERSITY ITHACA, NY 14853, 4 April 2023 (2023-04-04), XP091477155
- GRICE W. P. ET AL: "Two-Party secret key distribution via a modified quantum secret sharing protocol", vol. 23, no. 6, 11 March 2015 (2015-03-11), US, pages 7300, XP093225392, ISSN: 1094-4087, Retrieved from the Internet <URL:https://www.osapublishing.org/viewmedia.cfm?URI=oe-23-6-7300> DOI: 10.1364/OE.23.007300
- GEITZ MARC ET AL: "Hybrid QKD & PQC Protocols implemented in the Berlin OpenQKD testbed", 2023 8TH INTERNATIONAL CONFERENCE ON FRONTIERS OF SIGNAL PROCESSING (ICFSP), IEEE, 23 October 2023 (2023-10-23), pages 69 - 74, XP034499363, DOI: 10.1109/ICFSP59764.2023.10372894

## Beschreibung

Die Erfindung betrifft ein Verfahren zum Übertragen eines geheimen Schlüssels innerhalb eines Quantenschlüsselaustausch, QKD,-Netzwerks, QKDN, wobei ein Quell-QKD-Knoten einer ersten QLine eines QKDN und ein intermediärer Charlie-QKD-Knoten der ersten QLine einen ersten QKD-Schlüssel aus Photonenpulsen gewinnen, die ein terminaler Alice-QKD-Knoten der ersten QLine sendet und ein terminaler Bob-QKD-Knoten der ersten QLine detektiert; und ein Ziel-QKD-Knoten einer zweiten QLine des QKDN und ein intermediärer Charlie-QKD-Knoten der zweiten QLine einen zweiten QKD-Schlüssel aus Photonenpulsen gewinnen, die ein terminaler Alice-QKD-Knoten der zweiten QLine sendet und ein von dem terminalen Bob-QKD-Knoten der ersten QLine verschiedener terminaler Bob-QKD-Knoten der zweiten QLine detektiert. Ferner betrifft die Erfindung ein QKDN.

Die QLine ist ein lineares QKDN, das eine geordnete Folge, d.h. eine lineare Anordnung von quantenoptisch verbundenen Knoten umfasst und beispielsweise von M. Doosti et al. in "Establishing shared secret keys on quantum line networks: protocol and security", veröffentlicht im Jahr 2023 als arXiv preprint arXiv:2304.01881, beschrieben worden ist. Die QLine ist dafür konfiguriert, dass QKD-Schlüssel zwischen einem Quell-QKD-Knoten und einem Ziel-QKD-Knoten der QLine geteilt werden. Der Quell-QKD-Knoten kann den geheimen Schlüssel mit einem geteilten QKD-Schlüssel XORen, d.h. verschlüsseln, und den XORten geheimen Schlüssel sicher zu dem Ziel-QKD-Knoten übertragen. Unter XORen ist ein bitweises Verknüpfen mittels des XOR-Operators zu verstehen, wobei XOR eine Abkürzung für die mathematische Operation "eXclusive OR" ist.

Der geheime Schlüssel und der QKD-Schlüssel umfassen jeweils eine Folge zufälliger Bits. Der geheime Schlüssel wird zum Verschlüsseln von Nutzdaten verwendet, während der QKD-Schlüssel zum Verschlüsseln des zu übertragenden geheimen Schlüssels und damit zum Sichern der Übertragung des geheimen Schlüssels verwendet wird. Der verschlüsselte geheime Schlüssel kann digital, d.h. nicht quantenoptisch, von dem Quell-QKD-Knoten zu dem Ziel-QKD-Knoten übertragen werden, während der QKD-Schlüssel von QKD-Knoten der QLine quantenoptisch geteilt wird.

Die QLine umfasst einen terminalen Alice-QKD-Knoten, der zum Emittieren von Photonenpulsen konfiguriert ist, und einen terminalen Bob-QKD-Knoten, der zum Detektieren von Photonenpulsen konfiguriert ist. Die Photonen jedes Photonenpulses sind kohärent, d.h., sie haben eine identische Phase, und bilden ein Wellenpaket. Theoretisch ist ein einzelnes Photon ausreichend für einen Photonenpuls. Der terminale Alice-QKD-Knoten und der terminale Bob-QKD-Knoten sind an entgegengesetzten Enden der QLine angeordnet. Die QLine kann ferner einen oder mehrere intermediäre Charlie-QKD-Knoten umfassen, die zwischen dem terminalen Alice-QKD-Knoten und dem terminalen Bob-QKD-Knoten angeordnet sind.

Es wird angemerkt, dass in der QLine ausschließlich der terminale Alice-QKD-Knoten einen Laser umfasst, der zum Emittieren von Photonenpulsen konfiguriert ist. Entsprechend umfasst ausschließlich der terminale Bob-QKD-Knoten einen Detektor, der zum Detektieren der Photonenpulse konfiguriert ist, die von dem terminalen Alice-QKD-Knoten emittiert werden. Infolgedessen ist die QLine eine sehr kostengünstige Möglichkeit, ein QKDN zu implementieren. Darüber hinaus repräsentiert die QLine trotz der streng linearen Anordnung der QKD-Knoten einen vollständigen logischen Graphen. Jedes beliebige Paar von QKD-Knoten der QLine kann einen QKD-Schlüssel teilen.

Der terminale Alice-QKD-Knoten und der terminale Bob-QKD-Knoten umfassen zusätzlich jeweils einen Phasenmodulator. Jeder intermediäre Charlie-QKD-Knoten umfasst ausschließlich einen Phasenmodulator und ist infolgedessen weder zum Detektieren noch zum Emittieren von Photonenpulsen konfiguriert.

Allerdings können ein Quell-QKD-Knoten, der zu der ersten QLine gehört, und ein Ziel-QKD-Knoten, der zu der zweiten QLine gehört, keinen QKD-Schlüssel teilen.

Es ist daher eine Aufgabe der Erfindung, ein Verfahren zum Übertragen eines geheimen Schlüssels innerhalb eines QKDN vorzuschlagen, das zwei QKD-Knoten unterschiedlicher QLines ein Teilen eines QKD-Schlüssels erlaubt. Eine weitere Aufgabe der Erfindung besteht darin, ein QKDN bereitzustellen.

Ein Gegenstand der Erfindung ist ein Verfahren zum Übertragen eines geheimen Schlüssels innerhalb eines Quantenschlüsselaustausch, QKD,-Netzwerks, QKDN, wobei ein Quell-QKD-Knoten einer ersten QLine eines QKDN und ein intermediärer Charlie-QKD-Knoten der ersten QLine einen ersten QKD-Schlüssel aus Photonenpulsen gewinnen, die ein terminaler Alice-QKD-Knoten der ersten QLine sendet und ein terminaler Bob-QKD-Knoten der ersten QLine detektiert; und ein Ziel-QKD-Knoten einer zweiten QLine des QKDN und ein intermediärer Charlie-QKD-Knoten der zweiten QLine einen zweiten QKD-Schlüssel aus Photonenpulsen gewinnen, die ein terminaler Alice-QKD-Knoten der zweiten QLine sendet und ein von dem terminalen Bob-QKD-Knoten der ersten QLine verschiedener terminaler Bob-QKD-Knoten der zweiten QLine detektiert. Das Gewinnen eines QKD-Schlüssels wird in englischer Sprache als "sifting" bezeichnet.

Die von der ersten QLine verwendeten Photonenpulse und die von der zweiten QLine verwendeten Photonenpulse können eine identische Wellenlänge oder verschiedene Wellenlängen aufweisen. Es versteht sich, dass die Nummerierung der QLines willkürlich und nicht einschränkend ist, d.h. ebenso können jeweils der Quell-QKD-Knoten zu der zweiten QLine und der Ziel-QKD-Knoten zu der ersten QLine gehören.

Erfindungsgemäß teilen die erste QLine und die zweite QLine den intermediären Charlie-QKD-Knoten und überträgt der Quell-QKD-Knoten der ersten QLine einen mit dem gewonnenen ersten QKD-Schlüssel XORten geheimen Schlüssel zu dem geteilten intermediären Charlie-QKD-Knoten und überträgt der geteilte intermediäre Charlie-QKD-Knoten den mit dem gewonnenen zweiten QKD-Schlüssel XORten geheimen Schlüssel zu dem Ziel-QKD-Knoten der zweiten QLine. Die erste QLine und die zweite QLine sind mittels des geteilten Charlie-QKD-Knotens logisch verbunden. Das Übertragen des geheimen Schlüssels erfolgt in zwei Schritten über den geteilten intermediären Charlie-QKD-Knoten und verbraucht zwei von dem geteilten intermediären Charlie-QKD-Knoten geteilte QKD-Schlüssel. Jeder von dem geteilten intermediären Charlie-QKD-Knoten verschiedene QKD-Knoten der ersten QLine kann der Quell-QKD-Knoten im Sinne der Erfindung sein. Ebenso kann jeder von dem geteilten intermediären Charlie-QKD-Knoten verschiedene QKD-Knoten der zweiten QLine der Ziel-QKD-Knoten im Sinne der Erfindung sein. Erfindungsgemäß ist er aber als ein Übergangs-QKD-Knoten zu verstehen, der es dem geheimen Schlüssel ermöglicht, von der ersten QLine zu der zweiten QLine zu wechseln und damit von dem Quell-QKD-Knoten der ersten QLine zu dem Ziel-QKD-Knoten der zweiten QLine übertragen zu werden.

Der geteilte intermediäre Charlie-QKD-Knoten kann aufgrund seiner Zugehörigkeit sowohl zu der ersten QLine als auch zu der zweiten QLine in an sich bekannter Weise Quell-QKD-Knoten oder Ziel-QKD-Knoten zu jedem Ziel-QKD-Knoten bzw. Quell-QKD-Knoten der ersten QLine oder der zweiten QLine sein. Durch den geteilten intermediären Charlie-QKD-Knoten bilden beide QLines gemeinsam einen vollständigen logischen Graphen aller QKD-Knoten der ersten QLine und der zweiten QLine, d.h. jedes beliebige Paar zweier QKD-Knoten kann unabhängig von einer Zugehörigkeit zu der ersten QLine oder der zweiten QLine einen geheimen Schlüssel übertragen.

In einer Ausführungsform wird jeder Photonenpuls von jedem QKD-Knoten der jeweiligen QLine zufällig um einen Phasenwinkel *ϕₚ = π*(*bₚ*/2 *+ sₚ*) phasenverschoben, wobei *ϕₚ* der von einem p-ten QKD-Knoten bestimmte Phasenwinkel ist und *bₚ*,*sₚ* zufällige von dem p-ten QKD-Knoten bestimmte Basis- bzw. Schlüsselbits sind. Aufgrund dessen wendet jede QLine insgesamt eine Phasenverschiebung von *Φ =* Σ*_{pεQLine} ϕₚ,* auf den Photonenpuls an. Die Phasenverschiebung ist eine unitäre Operation und umfasst weder ein Detektieren noch ein Emittieren.

Beispielsweise kann das Gewinnen des QKD-Schlüssels ein Bestimmen jedes Bits des QKD-Schlüssels abhängig von Basis- bzw. Schlüsselbits *bₚ*,*sₚ* umfassen, die von dem jeweiligen terminalen Bob-QKD-Knoten veröffentlicht werden. Jedes Bit *sₚ* des jeweiligen QKD-Schlüssels kann erfolgreich gewonnen werden, wenn der Quell-QKD-Knoten und der geteilte intermediäre Charlie-QKD-Knoten bzw. der Ziel-QKD-Knoten und der geteilte intermediäre Charlie-QKD-Knoten zufällig dieselben Basisbits verwenden. Der jeweils gewonnene QKD-Schlüssel umfasst eine Mehrzahl von sukzessiv gewonnenen Bits.

Vorteilhaft wird ein zusammengesetzter geheimer Schlüssel als der geheime Schlüssel übertragen und werden verschiedene Partitionen des zusammengesetzten geheimen Schlüssels mittels verschiedener geteilter intermediärer Charlie-QKD-Knoten übertragen. Sowohl der geheime Schlüssel als auch der QKD-Schlüssel sind eine geordnete Folge von Bits, d.h. binären Ziffern, und können beispielsweise 256 Bits umfassen. Falls jede Partition des zusammengesetzten geheimen Schlüssels 128 Bits umfasst, umfasst der zusammengesetzte geheime Schlüssel ein ganzzahliges Vielfaches von 128 Bits. Beispielsweise können zwei konkatenierte Partitionen von 128 Bits einen zusammengesetzten geheimen Schlüssel von 256 Bits ergeben. Offenkundig ist eine Reihenfolge der Partitionen relevant und muss beim Übertragen des zusammengesetzten geheimen Schlüssels erhalten bleiben.

Das Übertragen des geheimen Schlüssels wird verteilt oder dezentralisiert. Dadurch wird eine Gefahr eines Lauschangriffs, in englischer Sprache "eavesdropper attack", verringert. Selbstverständlich kann auch der zusammengesetzte geheime Schlüssel als geheimer Schlüssel bezeichnet und in mehrere Partitionen geteilt werden, von denen jede Partition mittels eines erfindungsgemäßen Verfahrens über einen anderen geteilten intermediären Charlie-QKD-Knoten übertragen wird.

Alternativ kann ein Vorläuferschlüssel eines geheimen Schlüssels als der geheime Schlüssel übertragen werden, wobei verschiedene Vorläuferschlüssel mittels verschiedener geteilter intermediärer Charlie-QKD-Knoten übertragen werden. Die Vorläuferschlüssel sind verschieden von dem geheimen Schlüssel. Jedoch ist der geheime Schlüssel durch die Vorläuferschlüssel eindeutig bestimmt.

Bevorzugt leitet eine Schlüsselableitungsfunktion, KDF, des Ziel-QKD-Knotens den geheimen Schlüssel aus den übertragenen Partitionen bzw. Vorläuferschlüsseln ab. Der Quell-QKD-Knoten und der Ziel-QKD-Knoten können den geheimen Schlüssel aus den Partitionen bzw. Vorläuferschlüsseln durch Anwenden einer Schlüsselableitungsfunktion, key derivation function, KDF, auf die übertragenen Partitionen bzw. Vorläuferknoten ableiten. Im Falle der Partitionen ist die Schlüsselableitungsfunktion eine reihenfolgeerhaltende Konkatenation. Im Falle der Vorläuferschlüssel kann die Schlüsselableitungsfunktion komplexer sein und beliebige bitweise Operationen umfassen. Jeder Vorläuferschlüssel kann eine identische Anzahl von Bits umfassen, beispielsweise 256 Bits. Falls die Schlüsselableitungsfunktion bezogen auf die Vorläuferschlüssel symmetrisch ist, ist die Reihenfolge der Vorläuferschlüssel offenkundig irrelevant und kann infolgedessen zufällig sein.

Günstigerweise speichert der geteilte intermediäre Charlie-QKD-Knoten den gewonnenen ersten QKD-Schlüssel in einem lokalen Schlüsselspeicher, LKS, zwischen und XORt den übertragenen XORten geheimen Schlüssel mit dem zwischengespeicherten ersten QKD-Schlüssel und mit dem zweiten gewonnenen QKD-Schlüssel.

Alternativ kann der geteilte intermediäre Charlie-QKD-Knoten durch XORen der gewonnenen ersten und zweiten QKD-Schlüssel einen Übergangs-QKD-Schlüssel erzeugen, den erzeugten Übergangs-QKD-Schlüssel in einem LKS zwischenspeichern und den übertragenen XORten geheimen Schlüssel mit dem zwischengespeicherten Übergangs-QKD-Schlüssel XORen. Das Zwischenspeichern des gewonnenen ersten QKD-Schlüssels oder des erzeugten Übergangs-QKD-Schlüssels ermöglicht es dem geteilten intermediären Charlie-QKD-Knoten, den geheimen Schlüssel von der ersten QLine zu der zweiten QLine zu übertragen.

Ein weiterer Gegenstand der Erfindung ist ein Quantenschlüsselaustausch, QKD,-Netzwerk, QKDN, umfassend eine erste QLine, eine zweite QLine und einen von der ersten QLine und der zweiten QLine geteilten intermediären Charlie-QKD-Knoten.

Erfindungsgemäß umfasst das QKDN einen geteilten intermediären Charlie-QKD-Knoten und umfasst der geteilte intermediäre Charlie-QKD-Knoten einen mit der ersten QLine verbundenen ersten Phasenmodulator und einen von dem ersten Phasenmodulator verschiedenen mit der zweiten QLine verbundenen zweiten Phasenmodulator. Die beiden Phasenmodulatoren ermöglichen es dem geteilten intermediären Charlie-QKD-Knoten, die erste QLine und die zweite QLine quantenoptisch zu trennen. Der geteilte intermediäre Charlie-QKD-Knoten ist als ein vertrauenswürdiger Knoten, trusted node, konfiguriert und umfasst beispielsweise ein einbruchssicheres Gehäuse ähnlich einem Tresor.

In einer Ausführungsform umfasst das QKDN eine Mehrzahl von geteilten intermediären Charlie-QKD-Knoten. Die mehreren geteilten intermediären Charlie-QKD-Knoten ermöglichen ein dezentrales bzw. verteiltes Übertragen eines geheimen Schlüssels. Mit anderen Worten können Partitionen des zusammengesetzten geheimen Schlüssels oder Vorläuferschlüssel des geheimen Schlüssels über verschiedene geteilte intermediäre Charlie-QKD-Knoten übertragen werden, wodurch eine Sicherheit des QKDN weiter erhöht ist.

Jeder geteilte intermediäre Charlie-QKD-Knoten kann einen der ersten QLine zugeordneten ersten lokalen Schlüsselspeicher, LKS, und einen von dem ersten LKS verschiedenen der zweiten QLine zugeordneten zweiten LKS umfassen. Die LKS sind konfiguriert, gewonnene QKD-Schlüssel oder erzeugte Übergangsschlüssel zwischenzuspeichern.

Ferner kann jeder QKD-Knoten jeder QLine eine Schlüsselableitungsfunktion, KDF, umfassen. Die Schlüsselableitungsfunktion ist konfiguriert, aus Partitionen eines zusammengesetzten geheimen Schlüssels oder aus Vorläuferschlüsseln den übertragenen geheimen Schlüssel abzuleiten.

Vorteilhaft umfasst das QKDN mehr als zwei QLines, von denen jede QLine mit jeder weiteren QLine über geteilte intermediäre Charlie-QKD-Knoten verbunden ist. Die geteilten intermediären Charlie-QKD-Knoten ermöglichen ein Verketten der mehreren QLines, wodurch eine räumliche Erstreckung des QKDN nicht durch physikalische Abstandsgrenzen einer QLine eingeschränkt wird. Vielmehr kann ein auf diese Weise implementiertes QKDN eine beliebige räumliche Ausdehnung aufweisen, wenn es eine entsprechende genügende Anzahl von QLines umfasst.

Ein wesentlicher Vorteil des erfindungsgemäßen Verfahrens besteht darin, dass ein geheimer Schlüssel zwischen zwei verschiedenen QLines eines QKDN übertragen werden kann. Ein weiterer Vorteil ist, dass ein QKDN aus einer Mehrzahl von QLines auf wirtschaftliche Weise einen vollständigen logischen Graphen aller QKD-Knoten des QKDN darstellen kann. Zudem ist eine räumliche Ausdehnung nicht durch physikalische Abstandsgrenzen einer QLine, sondern lediglich durch eine Anzahl von QLines des QKDN beschränkt.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in den Zeichnungen schematisch dargestellt und wird im Folgenden unter Bezugnahme auf die Zeichnungen ausführlich beschrieben. Es zeigt
- Fig. 1: in einem Entitätendiagramm ein QKDN nach einer Ausführungsform der Erfindung;
- Fig. 2: in einer vergrößerten Detailansicht den geteilten intermediären Charlie-QKD-Knoten des in Fig. 1 gezeigten QKDN;
- Fig. 3: in einem Entitätendiagramm ein QKDN nach einer weiteren Ausführungsform der Erfindung;
- Fig. 4: in einem Entitätendiagramm ein QKDN nach einer dritten Ausführungsform der Erfindung.

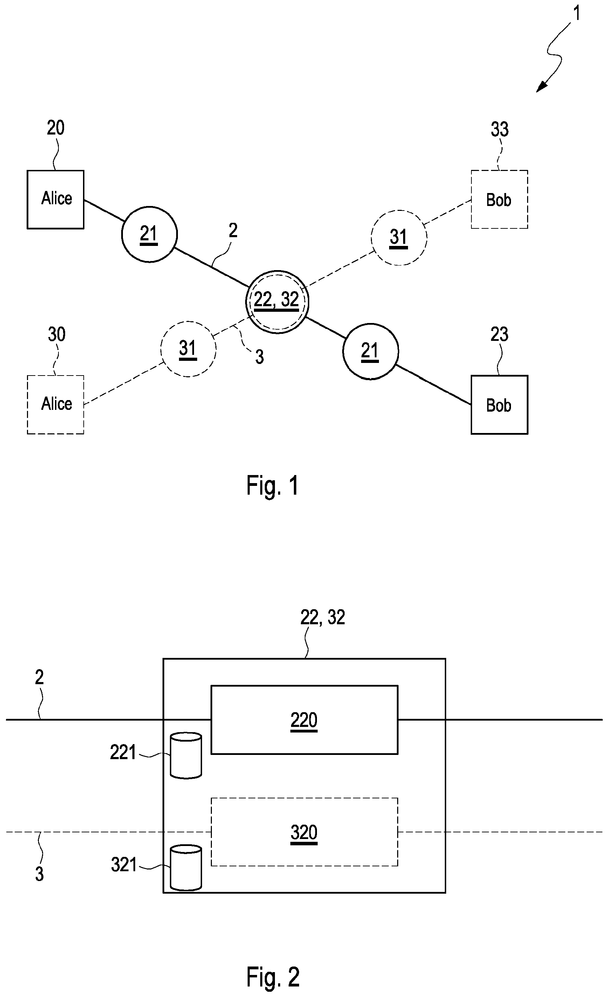

Fig. 1 zeigt in einem Entitätendiagramm ein QKDN 1 nach einer Ausführungsform der Erfindung. Das Quantenschlüsselaustausch, QKD,-Netzwerk, QKDN, 1 umfasst eine erste QLine 2 und eine zweite QLine 3 und einen von der ersten QLine 2 und der zweiten QLine 3 geteilten intermediären Charlie-QKD-Knoten 22, 32. Das QKDN 1 kann ferner weitere intermediäre Charlie-QKD-Knoten 21, 31 sowie Alice-QKD-Knoten 20, 30 und Bob-QKD-Knoten 23, 33 umfassen, wobei der Alice-QKD-Knoten 20, der weitere intermediäre Charlie-QKD-Knoten 21 und der Bob-QKD-Knoten 23 zu der ersten QLine 2 gehören und der Alice-QKD-Knoten 30, der weitere intermediäre Charlie-QKD-Knoten 31 und der Bob-QKD-Knoten 33 zu der zweiten QLine 3 gehören.

Fig. 2 zeigt in einer vergrößerten Detailansicht den geteilten intermediären Charlie-QKD-Knoten 22, 32 des in Fig. 1 gezeigten QKDN 1. Der geteilte intermediäre Charlie QKD-Knoten 22, 32 umfasst einen mit der ersten QLine 2 verbundenen ersten Phasenmodulator 220 und einen von dem ersten Phasenmodulator 220 verschiedenen mit der zweiten QLine 3 verbundenen zweiten Phasenmodulator 320.

Der geteilte intermediäre Charlie-QKD-Knoten 22, 32 kann ferner einen der ersten QLine 2 zugeordneten ersten lokalen Schlüsselspeicher, LKS, 221 und einen von dem ersten LKS 221 verschiedenen der zweiten QLine 3 zugeordneten zweiten LKS 321 umfassen. Abgesehen davon kann jeder QKD-Knoten 20, 21, 22, 23, 30, 31, 32, 33 jeder QLine 2, 3 eine Schlüsselableitungsfunktion, KDF, (nicht dargestellt) umfassen.

Das QKDN 1 ist konfiguriert, zum Übertragen eines geheimen Schlüssels innerhalb des QKDN 1 ein Verfahren nach einer Ausführungsform der Erfindung wie folgt auszuführen.

Ein Quell-QKD-Knoten der ersten QLine 2 des QKDN 1 und der intermediäre Charlie-QKD-Knoten 22 der ersten QLine 2 gewinnen einen ersten QKD-Schlüssel aus Photonenpulsen, die der terminale Alice-QKD-Knoten 20 der ersten QLine 2 sendet und der terminale Bob-QKD-Knoten 23 der ersten QLine 2 detektiert.

Ein Ziel-QKD-Knoten der zweiten QLine 3 des QKDN 1 und der intermediäre Charlie-QKD-Knoten 32 der zweiten QLine 3 gewinnen einen zweiten QKD-Schlüssel aus Photonenpulsen, die der terminale Alice-QKD-Knoten 30 der zweiten QLine 3 sendet und ein von dem terminalen Bob-QKD-Knoten 23 der ersten QLine 2 verschiedener terminaler Bob-QKD-Knoten 33 der zweiten QLine 3 detektiert, wobei die erste QLine 2 und die zweite QLine 3 den intermediären Charlie-QKD-Knoten 22, 32 teilen.

Als Quell-QKD-Knoten kommt jeder von dem intermediären Charlie-QKD-Knoten 22 verschiedene QKD-Knoten 20, 21, 23 der ersten QLine 2 in Betracht. Als Ziel-QKD-Knoten kommt jeder von dem intermediären Charlie-QKD-Knoten 32 verschiedene QKD-Knoten 30, 31, 33 der zweiten QLine 3 in Betracht.

Der Quell-QKD-Knoten der ersten QLine 2 überträgt einen mit dem gewonnenen ersten QKD-Schlüssel XORten geheimen Schlüssel zu dem geteilten intermediären Charlie-QKD-Knoten 22, 32, und der geteilte intermediäre Charlie-QKD-Knoten 22, 32 überträgt den mit dem gewonnenen zweiten QKD-Schlüssel XORten geheimen Schlüssel zu dem Ziel-QKD-Knoten der zweiten QLine 3.

Beispielsweise speichert der geteilte intermediäre Charlie-QKD-Knoten 22, 32 den gewonnenen ersten QKD-Schlüssel in dem lokalen Schlüsselspeicher, LKS, 221 zwischen und XORt den übertragenen XORten geheimen Schlüssel mit dem zwischengespeicherten ersten QKD-Schlüssel und mit dem zweiten gewonnenen QKD-Schlüssel.

Der geteilte intermediäre Charlie-QKD-Knoten 22, 32 kann durch XORen der gewonnenen ersten und zweiten QKD-Schlüssel alternativ einen Übergangs-QKD-Schlüssel erzeugen, den erzeugten Übergangs-QKD-Schlüssel in dem LKS 321 zwischenspeichern und den übertragenen XORten geheimen Schlüssel mit dem zwischengespeicherten Übergangs-QKD-Schlüssel XORen.

Bevorzugt wird jeder Photonenpuls von jedem QKD-Knoten 20, 21, 22, 23; 30, 31, 32, 33 der jeweiligen QLine 2, 3 zufällig um einen Phasenwinkel *ϕₚ* = *π*(*bₚ*/2 + *sₚ*) phasenverschoben, wobei *ϕₚ* der von einem p-ten QKD-Knoten bestimmte Phasenwinkel ist und *bₚ*,*sₚ* zufällige von dem p-ten QKD-Knoten bestimmte Basis- bzw. Schlüsselbits sind.

Das Gewinnen des QKD-Schlüssels kann ein Bestimmen jedes Bits des QKD-Schlüssels abhängig von Basis- bzw. Schlüsselbits *bₚ*,*sₚ* umfassen, die von dem jeweiligen terminalen Bob-QKD-Knoten 23, 33 veröffentlicht werden.

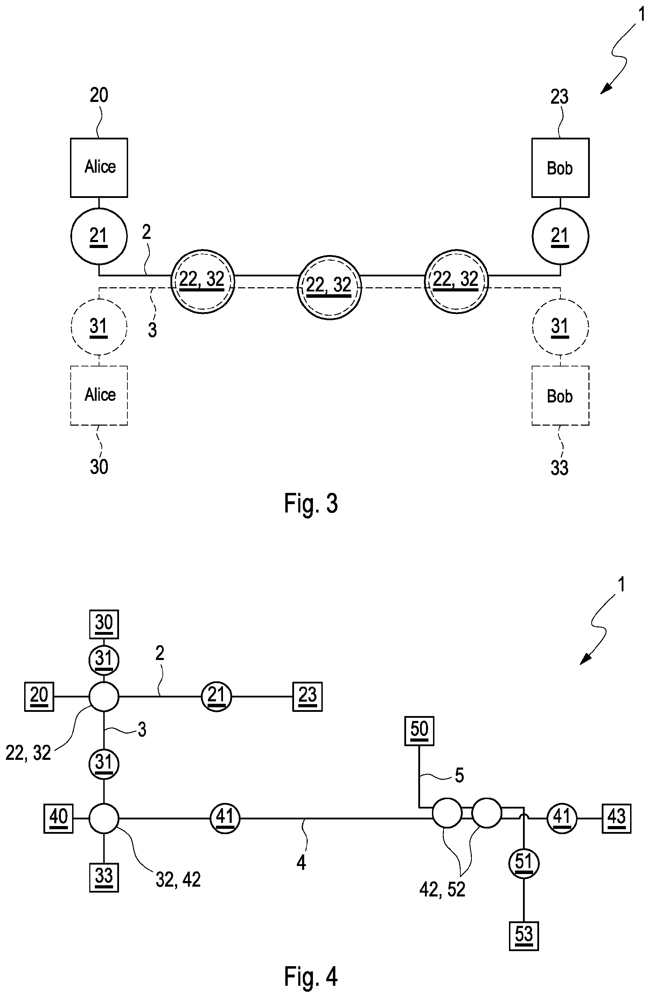

Fig. 3 zeigt in einem Entitätendiagramm ein QKDN 1 nach einer weiteren Ausführungsform der Erfindung. Das QKDN 1 weist denselben Grundaufbau auf wie das in Fig. 1 gezeigte QKDN und unterscheidet sich von diesem dadurch, dass das QKDN 1 eine Mehrzahl von geteilten intermediären Charlie-QKD-Knoten 22, 32 aufweist, hier lediglich beispielhaft und nicht einschränkend drei geteilte intermediäre Charlie-QKD-Knoten 22, 32.

Das QKDN 1 ist konfiguriert, zum Übertragen eines geheimen Schlüssels innerhalb des QKDN 1 das vorstehend beschriebene erfindungsgemäße Verfahren auszuführen. Insbesondere können ein zusammengesetzter geheimer Schlüssel als der geheime Schlüssel übertragen werden und verschiedene Partitionen des zusammengesetzten geheimen Schlüssels mittels verschiedener intermediärer Charlie-QKD-Knoten 22, 32 übertragen werden.

Alternativ oder zusätzlich kann ein Vorläuferschlüssel eines geheimen Schlüssels als der geheime Schlüssel übertragen werden, wobei verschiedene Vorläuferschlüssel mittels verschiedener intermediärer Charlie-QKD-Knoten 22, 32 übertragen werden. In beiden Fällen leitet idealerweise die Schlüsselableitungsfunktion, KDF, des Ziel-QKD-Knotens den geheimen Schlüssel aus den übertragenen Partitionen bzw. Vorläuferschlüsseln ab.

Fig. 4 zeigt in einem Entitätendiagramm ein QKDN 1 nach einer dritten Ausführungsform der Erfindung. Das QKDN 1 umfasst mehr als zwei QLines 2, 3, 4, 5, d.h. neben der ersten QLine 2 und der zweiten QLine 3 weitere QLines 4, 5, d.h. lediglich beispielhaft und nicht einschränkend vier QLines 2, 3, 4, 5. Jede QLine 2, 3 ist mit jeder weiteren QLine 4, 5 über geteilte intermediäre Charlie-QKD-Knoten 22, 32, 42, 52 verbunden. Jedes Paar von QLines 2, 3, 4, 5, das zumindest einen intermediären Charlie-QKD-Knoten teilt, weist dabei einen in den Figuren 1 bzw. 3 gezeigten Grundaufbau auf.

### Bezugszeichenliste

- 1: QKDN
- 2: erste QLine
- 20: terminaler Alice-QKD-Knoten
- 21: intermediärer Charlie-QKD-Knoten
- 22: geteilter intermediärer Charlie-QKD-Knoten
- 220: Phasenmodulator
- 221: LKS
- 23: terminaler Bob-QKD-Knoten
- 3: zweite QLine
- 30: terminaler Alice-QKD-Knoten
- 31: intermediärer Charlie-QKD-Knoten
- 32: geteilter intermediärer Charlie-QKD-Knoten
- 320: Phasenmodulator
- 321: LKS
- 33: terminaler Bob-QKD-Knoten
- 4: weitere QLine
- 40: terminaler Alice-QKD-Knoten
- 41: intermediärer Charlie-QKD-Knoten
- 42: geteilter intermediärer Charlie-QKD-Knoten
- 43: terminaler Bob-QKD-Knoten
- 5: weitere QLine
- 50: terminaler Alice-QKD-Knoten
- 51: intermediärer Charlie-QKD-Knoten
- 52: geteilter intermediärer Charlie-QKD-Knoten
- 53: terminaler Bob-QKD-Knoten

## Patentansprüche

1. Verfahren zum Übertragen eines geheimen Schlüssels innerhalb eines Quantenschlüsselaustausch, QKD,-Netzwerks, QKDN, (1) wobei
- ein Quell-QKD-Knoten einer ersten QLine (2) eines QKDN (1) und ein intermediärer Charlie-QKD-Knoten (22) der ersten QLine (2) einen ersten QKD-Schlüssel aus Photonenpulsen gewinnen, die ein terminaler Alice-QKD-Knoten (20) der ersten QLine (2) sendet und ein terminaler Bob-QKD-Knoten (23) der ersten QLine (2) detektiert;
- ein Ziel-QKD-Knoten einer zweiten QLine (3) des QKDN (1) und ein intermediärer Charlie-QKD-Knoten (32) der zweiten QLine (3) einen zweiten QKD-Schlüssel aus Photonenpulsen gewinnen, die ein terminaler Alice-QKD-Knoten (30) der zweiten QLine (3) sendet und ein von dem terminalen Bob-QKD-Knoten (23) der ersten QLine (2) verschiedener terminaler Bob-QKD-Knoten (33) der zweiten QLine (3) detektiert, wobei die erste QLine (2) und die zweite QLine (3) den intermediären Charlie-QKD-Knoten (22, 32) teilen;
- der Quell-QKD-Knoten der ersten QLine (2) einen mit dem gewonnenen ersten QKD-Schlüssel XORten geheimen Schlüssel zu dem geteilten intermediären Charlie-QKD-Knoten (22, 32) überträgt und der geteilte intermediäre Charlie-QKD-Knoten (22, 32) den mit dem gewonnenen zweiten QKD-Schlüssel XORten geheimen Schlüssel zu dem Ziel-QKD-Knoten der zweiten QLine (3) überträgt.

2. Verfahren nach Anspruch 1, bei dem jeder Photonenpuls von jedem QKD-Knoten (20, 21, 22, 23; 30, 31, 32, 33) der jeweiligen QLine (2, 3) zufällig um einen Phasenwinkel *ϕₚ = π*(*bₚ*/2 *+ sₚ*) phasenverschoben wird, wobei *ϕₚ* der von einem p-ten QKD-Knoten bestimmte Phasenwinkel ist und *bₚ*,*sₚ* zufällige von dem p-ten QKD-Knoten bestimmte Basis- bzw. Schlüsselbits sind.

3. Verfahren nach Anspruch 2, bei dem das Gewinnen des QKD-Schlüssels ein Bestimmen jedes Bits des QKD-Schlüssels abhängig von Basis- bzw. Schlüsselbits *bₚ*,*sₚ* umfasst, die von dem jeweiligen terminalen Bob-QKD-Knoten (23, 33) veröffentlicht werden.

4. Verfahren nach einem der Ansprüche 1 bis 3, bei dem ein zusammengesetzter geheimer Schlüssel als der geheime Schlüssel übertragen wird und verschiedene Partitionen des zusammengesetzten geheimen Schlüssels mittels verschiedener geteilter intermediärer Charlie-QKD-Knoten (22, 32) übertragen werden und/oder bei dem ein Vorläuferschlüssel des geheimen Schlüssels als der geheime Schlüssel übertragen wird, wobei verschiedene Vorläuferschlüssel mittels verschiedener geteilter intermediärer Charlie-QKD-Knoten (22, 32) übertragen werden.

5. Verfahren nach Anspruch 4, bei dem eine Schlüsselableitungsfunktion, KDF, des Ziel-QKD-Knotens den geheimen Schlüssel aus den übertragenen Partitionen bzw. Vorläuferschlüsseln ableitet.

6. Verfahren nach einem der Ansprüche 1 bis 5, bei dem der geteilte intermediäre Charlie-QKD-Knoten (22, 32) den gewonnenen ersten QKD-Schlüssel in einem lokalen Schlüsselspeicher, LKS, (221) zwischenspeichert und den übertragenen XORten geheimen Schlüssel mit dem zwischengespeicherten ersten QKD-Schlüssel und mit dem zweiten gewonnenen QKD-Schlüssel XORt oder bei dem der geteilte intermediäre Charlie-QKD-Knoten (22, 32) durch XORen der gewonnenen ersten und zweiten QKD-Schlüssel einen Übergangs-QKD-Schlüssel erzeugt, den erzeugten Übergangs-QKD-Schlüssel in einem LKS (321) zwischenspeichert und den übertragenen XORten geheimen Schlüssel mit dem zwischengespeicherten Übergangs-QKD-Schlüssel XORt.

7. Quantenschlüsselaustausch, QKD,-Netzwerk, QKDN, (1) umfassend eine erste QLine (2), eine zweite QLine (3) und einen von der ersten QLine (2) und der zweiten QLine (3) geteilten intermediären Charlie-QKD-Knoten (22, 32), der einen mit der ersten QLine (2) verbundenen ersten Phasenmodulator (220) und einen von dem ersten Phasenmodulator (220) verschiedenen mit der zweiten QLine (3) verbundenen zweiten Phasenmodulator (320) umfasst.

8. QKDN nach Anspruch 7, umfassend eine Mehrzahl von geteilten intermediären Charlie-QKD-Knoten (22, 32).

9. QKDN nach Anspruch 7 oder 8, bei dem jeder geteilte intermediäre Charlie-QKD-Knoten (22, 32) einen der ersten QLine (2) zugeordneten ersten lokalen Schlüsselspeicher, LKS, (221) und einen von dem ersten LKS (221) verschiedenen der zweiten QLine (3) zugeordneten zweiten LKS (321) umfasst und/oder jeder QKD-Knoten jeder QLine (2, 3) eine Schlüsselableitungsfunktion, KDF, umfasst.

10. QKDN nach einem der Ansprüche 7 bis 9, umfassend mehr als zwei QLines (2, 3, 4, 5), von denen jede QLine (2, 3) mit jeder weiteren QLine (4, 5) über geteilte intermediäre Charlie-QKD-Knoten (22, 32, 42, 52) verbunden ist.

## Claims

1. A method for transferring a secret key within a quantum key exchange, QKD, network, QKDN, (1) wherein
- a source QKD node of a first QLine (2) of a QKDN (1) and an intermediate Charlie QKD node (22) of the first QLine (2) obtain a first QKD key from photon pulses which are transmitted by a terminal Alice QKD node (20) of the first QLine (2) and which are detected by a terminal Bob QKD node (23) of the first QLine (2);
- a target QKD node of a second QLine (3) of the QKDN (1) and an intermediate Charlie QKD node (32) of the second QLine (3) obtain a second QKD key from photon pulses, which is transmitted by a terminal Alice QKD node (30) of the second QLine (3) and which are detected by a terminal Bob QKD node (33) of the second QLine (3), different from the terminal Bob QKD node (23) of the first QLine (2), wherein the first QLine (2) and the second QLine (3) share the intermediate Charlie QKD node (22, 32);
- the source QKD node of the first QLine (2) transfers a secret key XORed with the obtained first QKD key to the shared intermediate Charlie QKD node (22, 32), and the shared intermediate Charlie QKD node (22, 32) transfers the secret key XORed with the obtained second QKD key to the target QKD node of the second QLine (3).

2. The method according to claim 1, in which each photon pulse from each QKD node (20, 21, 22, 23; 30, 31, 32, 33) of the respective QLine (2, 3) is randomly phase-shifted by a phase angle ϕₚ = π(bₚ/2 + sₚ), wherein ϕₚ is the phase angle determined by a p-th QKD node and bₚ, sₚ are random base bits or, respectively, key bits determined by the p-th QKD node.

3. The method according to claim 2, in which obtaining the QKD key comprises determining each bit of the QKD key depending on base or, respectively, key bits bₚ, sₚ published by the respective terminal Bob QKD node (23, 33).

4. The method according to any of claims 1 to 3, in which a composite secret key is transferred as the secret key and different partitions of the composite secret key are transferred by means of different shared intermediate Charlie QKD nodes (22, 32) and/or in which a precursor key of the secret key is transferred as the secret key, wherein different precursor keys are transferred by means of different shared intermediate Charlie QKD nodes (22, 32).

5. The method according to claim 4, in which a key derivation function, KDF, of the target QKD node derives the secret key from the transferred partitions or, respectively, precursor keys.

6. The method according to any of claims 1 to 5, in which the shared intermediate Charlie QKD node (22, 32) caches the obtained first QKD key in a local key store, LKS, (221) and XORs the transferred XORed secret key with the cached first QKD key and with the second obtained QKD key, or in which the shared intermediate Charlie QKD node (22, 32) generates a transitional QKD key by XORing the obtained first and second QKD keys, caches the generated transitional QKD key in an LKS (321) and XORs the transferred XORed secret key with the cached transitional QKD key.

7. A quantum key exchange, QKD, network, QKDN, (1) comprising a first QLine (2), a second QLine (3) and an intermediate Charlie QKD node (22, 32) shared by the first QLine (2) and the second QLine (3), which comprises a first phase modulator (220) connected to the first QLine (2) and a second phase modulator (320) connected to the second QLine (3), the second phase modulator (320 being different from the first phase modulator (220).

8. The QKDN according to claim 7, comprising a plurality of shared intermediate Charlie QKD nodes (22, 32).

9. The QKDN according to claim 7 or 8, in which each shared intermediate Charlie QKD node (22, 32) comprises a first local key store, LKS, (221) assigned to the first QLine (2) and a second LKS (321), different from the first LKS (221), assigned to the second QLine (3), and/or each QKD node of each QLine (2, 3) comprises a key derivation function, KDF.

10. The QKDN according to any of claims 7 to 9, comprising more than two QLines (2, 3, 4, 5), each QLine (2, 3) being connected to each further QLine (4, 5) via shared intermediate Charlie QKD nodes (22, 32, 42, 52).

## Revendications

1. Procédé de transmission d'une clé secrète au sein d'un réseau d'échange de clés quantiques (QKD), QKDN, (1) dans lequel
- un nœud QKD source d'une première QLine (2) d'un QKDN (1) et un nœud QKD intermédiaire Charlie (22) de la première QLine (2) extraient une première clé QKD à partir d'impulsions photoniques émises par un nœud QKD terminal Alice (20) de la première QLine (2) et détectées par un nœud QKD terminal Bob (23) de la première QLine (2) ;
- un nœud QKD cible d'une deuxième QLine (3) du QKDN (1) et un nœud QKD intermédiaire Charlie (32) de la deuxième QLine (3) extraient une deuxième clé QKD à partir d'impulsions photoniques émises par un nœud QKD terminal Alice (30) de la deuxième QLine (3) et détectées par le nœud QKD terminal Bob (33) de la deuxième QLine (3), différent du nœud QKD terminal Bob (23) de la première QLine (2), la première QLine (2) et la deuxième QLine (3) partageant le nœud QKD intermédiaire Charlie (22, 32) ;
- le nœud QKD source de la première QLine (2) transmet une clé secrète, obtenue par une opération XOR avec la première clé QKD (22, 32) obtenue, au nœud QKD intermédiaire Charlie (22, 32) partagé, et le nœud QKD intermédiaire Charlie (22, 32) partagé transmet la clé secrète, obtenue par une opération XOR avec la deuxième clé QKD obtenue, au nœud QKD cible de la deuxième QLine (3).

2. Procédé selon la revendication 1, dans lequel chaque impulsion photonique provenant de chaque nœud QKD (20, 21, 22, 23 ; 30, 31, 32, 33) de la QLine (2, 3) respective est déphasée de manière aléatoire d'un angle de phase *φₚ = π(bₚ*/*2* + *sₚ),* où *φₚ* est l'angle de phase déterminé par un p-ième nœud QKD et *bₚ*, *sₚ* sont des bits de base et des bits de clé aléatoires déterminés par le p-ième nœud QKD.

3. Procédé selon la revendication 2, dans lequel l'obtention de la clé QKD comprend la détermination de chaque bit de la clé QKD en fonction de bits de base respectivement de bits de clé *bₚ, sₚ* publiés par le nœud QKD terminal Bob (23, 33) correspondant.

4. Procédé selon l'une des revendications 1 à 3, dans lequel une clé secrète composée est transmise en tant que clé secrète et différentes partitions de la clé secrète composée sont transmises au moyen de différents nœuds QKD intermédiaires Charlie (22, 32) partagés et/ou dans lequel une clé préliminaire de la clé secrète est transmise en tant que clé secrète, différentes clés préliminaires étant transmises au moyen de différents nœuds QKD intermédiaires Charlie (22, 32) partagés.

5. Procédé selon la revendication 4, dans lequel une fonction de déduction de clé, KDF, du nœud QKD cible déduit la clé secrète à partir des partitions transmises ou des clés précédentes.

6. Procédé selon l'une des revendications 1 à 5, dans lequel le nœud QKD intermédiaire Charlie (22, 32) partagé stocke temporairement la première clé QKD extraite dans une mémoire de clés locale, LKS, (221) et effectue une opération XOR avec la clé secrète transmise, la première clé QKD stockée temporairement et la deuxième clé QKD obtenue, ou dans lequel le nœud QKD intermédiaire Charlie (22, 32) partagé génère une clé QKD transitoire en effectuant une opération XOR entre la première et la deuxième clés QKD obtenues, stocke temporairement la clé QKD transitoire générée dans une LKS (321) et effectue une opération XOR avec la clé secrète transmise et la clé QKD transitoire stockée temporairement.

7. Réseau d'échange de clés quantiques (QKD), QKDN, (1) comprenant une première QLine (2), une deuxième QLine (3) et un nœud QKD intermédiaire Charlie (22, 32) partagé par la première QLine (2) et la deuxième QLine (3) (22, 32), qui comprend un premier modulateur de phase (220) relié à la première QLine (2) et un deuxième modulateur de phase (320), différent du premier modulateur de phase (220), relié à la deuxième QLine (3).

8. QKDN selon la revendication 7, comprenant une pluralité de nœuds QKD intermédiaires Charlie (22, 32) partagés.

9. QKDN selon la revendication 7 ou 8, dans lequel chaque nœud QKD intermédiaire Charlie (22, 32) partagé comprend une première mémoire de clés locale, LKS, associée à la première QLine (2), (221) et une deuxième LKS (321) associée à la deuxième QLine (3) et différente de la première LKS (221), et/ou chaque nœud QKD de chaque QLine (2, 3) comprend une fonction de déduction de clé, KDF.

10. QKDN selon l'une des revendications 7 à 9, comprenant plus de deux QLines (2, 3, 4, 5), chaque QLine (2, 3) étant reliée à chaque autre QLine (4, 5) par l'intermédiaire de nœuds QKD intermédiaires Charlie (22, 32, 42, 52) partagés.
